# EUROPEAN PATENT APPLICATION

(11) **EP 2 436 721 A1**
(43) Date of publication of application: **04.04.2012**
(21) Application number: 10780265.4
(22) Date of filing: 26.05.2010
(51) Int. Cl.: C08J 5/04, C08K 3/30, C08K 5/13, C08K 5/3435, C08K 5/3442, C08K 5/524, C08K 7/02, C08L 23/02, C08L 23/26, C08L 101/00

(54) **LONG-FIBER-REINFORCED RESIN COMPOSITION AND MOLDED OBJECT THEREOF**

(30) Priority: 29.05.2009 JP 2009131474
(71) Applicant: Prime Polymer Co., Ltd., Tokyo 105-7117 (JP)
(72) Inventor: GODA, Hirofumi, Sodegaura-shi Chiba 299-0265 (JP)
(74) Representative: Gille Hrabal
(86) International application number: PCT/JP2010/003515
(87) International publication number: WO 2010/137305

(57) **Abstract**

A long fiber-reinforced resin composition including components (A), (B), and (C), the composition including 50 to 90 wt% of the component (A) and 10 to 50 wt% of the component (B) based on the total content of the components (A) and (B), the component (A) having a content of reinforcing fibers of 20 to 60 wt% based on the total content of the components (A) and (B).

## Description

### TECHNICAL FIELD

The invention relates to a long fiber-reinforced resin composition and a shaped product using the same.

### BACKGROUND ART

A long fiber-reinforced resin composition has been widely used as a material for automotive module parts for which high strength is required. However, since the long fibers may remain on the surface of the product as a mass due to insufficient dispersibility, the product is often painted to cover them. Therefore, it may be unnecessary to provide a base material with weatherability.

For example, Patent Document 1 discloses a resin composition that contains a glass fiber-reinforced polyolefin, a light stabilizer, and a light absorber as a resin composition that utilizes reinforcing fibers. In Patent Document 1, the additives are added in an amount of 0.25 to 7.5 parts by weight in total. Patent Document 1 also discloses using carbon black and zinc sulfide as pigments. Patent Document 1 also discloses using a hindered amine as the light stabilizer, and using a benzotriazole or a benzoate as the light absorber.
Patent Document 2 discloses a toned glass fiber-reinforced thermoplastic composition that contains 0.001 to 5 parts by weight of an alkyl benzoate compound, 0.001 to 5 parts by weight of a hindered amine-type light stabilizer, and 0.05 to 10 parts by weight of an organic pigment, together with a phosphorus-type antioxidant.

Patent Document 3 discloses a composition that contains a glass fiber-reinforced polyolefin, 0.01 to 10 parts by weight of zinc sulfide, and 0.01 to 2 parts by weight of a hindered amine-type light stabilizer having a molecular weight of 1000 or more.
Patent Document 4 discloses a polyolefin resin composition that contains a polyolefin resin, a modified polyolefin resin, a fibrous filler, a hindered amine-type light stabilizer having a molecular weight of 1000 or more, a benzoate compound, and a white pigment having a Mohs hardness of 6 or less. The modified polyolefin resin is modified with an unsaturated carboxylic acid or a derivative thereof by 0.5 to 10 wt%, and has an MFR of 20 to 190.

### RELATED-ART DOCUMENT

### PATENT DOCUMENT

Patent Document 1: JP-A-9-235419
Patent Document 2: JP-A-2001-329178
Patent Document 3: JP-A-2001-192468
Patent Document 4: JP-A-2007-186687

### SUMMARY OF THE INVENTION

An object of the invention is to provide a long fiber-reinforced resin composition that ensures that glass fibers exhibit excellent dispersibility during molding, and provides the shaped product with excellent appearance. Another object of the invention is to provide a shaped product that can be used without having to paint (coat) the shaped product, and exhibits excellent weatherability and excellent mechanical strength (e.g., tensile strength at break and flexural modulus).

The inventor of the invention conducted extensive studies, and found that appearance of a mass of fibers on the surface of the shaped product can be suppressed by utilizing a resin having a short relaxation time as a resin included in long fiber-reinforced thermoplastic resin pellets and a diluent resin. The inventor also found that a shaped product that exhibits sufficient properties and weatherability (i.e., a shaped product that can be used without having to paint (coat) the shaped product, and exhibits excellent appearance and weatherability) can be obtained by coloring the long fiber-reinforced polyolefin resin composition using zinc sulfide (i.e., white pigment). These findings have led to the completion of the invention.

The invention provides the following long fiber-reinforced resin composition and the like.
1. A long fiber-reinforced resin composition comprising components (A), (B), and (C), the composition comprising 50 to 90 wt% of the component (A) and 10 to 50 wt% of the component (B) based on the total content of the components (A) and (B),
   the component (A) having a content of reinforcing fibers of 20 to 60 wt% based on the total content of the components (A) and (B),
   the component (A) being long fiber-reinforced thermoplastic resin pellets comprising a thermoplastic resin, a modified polyolefin resin that is modified with an unsaturated carboxylic acid or a derivative thereof, and reinforcing fibers, wherein (A-1) the thermoplastic resin has a melt index (resin temperature: 230°C, load: 21.18 N) of 100 to 250 g/10 min, (A-2) the thermoplastic resin has a relaxation time λ of 0.1 sec or less when an angular frequency w is 1 rad/sec, the relaxation time λ being calculated from a storage modulus G' and a loss modulus G" measured using a cone & plate rheometer, (A-3) the long fiber-reinforced thermoplastic resin pellets have a reinforcing fiber content of 40 to 70 wt%, and (A-4) the long fiber-reinforced thermoplastic resin pellets have a modified polyolefin resin content of 1 to 5 wt%,
   the component (B) being a polyolefin resin wherein (B-1) the polyolefin resin has a melt index (resin temperature: 230°C, load: 21.18 N) of 20 to 70 g/10 min, and (B-2) the polyolefin resin has a relaxation time λ of 0.23 sec or less when an angular frequency ω is 1 rad/sec, the relaxation time λ being calculated from a storage modulus G' and a loss modulus G" measured using a cone & plate rheometer, and
   the component (C) comprising (C-1) 0.1 to 10 parts by weight of zinc sulfide, (C-2) 0.01 to 1.0 parts by weight of a hindered amine-based light stabilizer, (C-3) 0.01 to 1.0 parts by weight of at least one of a phenol-based antioxidant and a phosphorus-based antioxidant, and (C-4) 0 to 10 parts by weight of an organic pigment, based on 100 parts by weight of the components (A) and (B) in total.
2. The long fiber-reinforced resin composition according to 1, wherein the component (C-3) comprises both the phenol-based antioxidant and the phosphorus-based antioxidant.
3. The long fiber-reinforced resin composition according to 1 or 2, wherein the component (C) further comprises (C-5) 0.01 to 1.0 parts by weight of at least one light absorber selected from a benzoate-based light absorber, a benzotriazole-based light absorber, and an alkyl benzoate-based light absorber, based on 100 parts by weight of the components (A) and (B) in total.
4. The long fiber-reinforced resin composition according to any one of 1 to 3, wherein the long fiber-reinforced thermoplastic resin pellets have a length of 4 mm to 8 mm.
5. The long fiber-reinforced resin composition according to any one of 1 to 4, wherein the component (A) has a content of reinforcing fibers of 20 to 50 wt% based on the total content of the components (A) and (B).
6. A shaped product comprising the long fiber-reinforced resin composition according to any one of 1 to 5.

The invention thus provides a long fiber-reinforced resin composition that can produce a shaped product that can be used without having to paint (coat) the shaped product, and exhibits excellent appearance and weatherability.

### BRIEF DESCRIPTION OF THE DRAWINGS

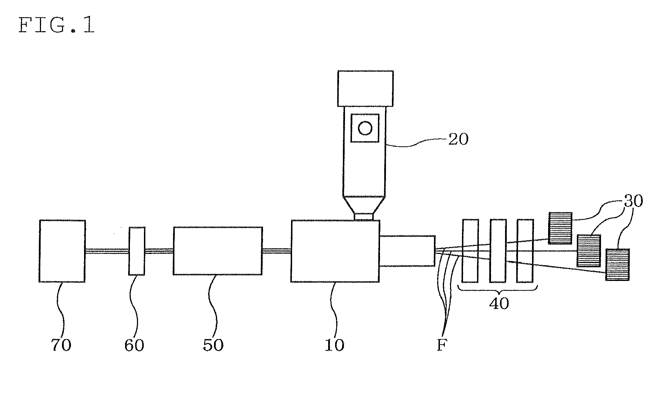

FIG. 1 is a schematic view showing a pellet production apparatus.

### DESCRIPTION OF EXEMPLARY EMBODIMENTS

A long fiber-reinforced resin composition according to the invention includes long fiber-reinforced thermoplastic resin pellets (component (A)), a polyolefin resin (component (B)), and predetermined additives (component (C)). Each component is described below.

### (1) Component (A)

The long fiber-reinforced resin composition according to the invention includes the long fiber-reinforced thermoplastic resin pellets including a thermoplastic resin, a modified polyolefin resin that is modified with an unsaturated carboxylic acid or a derivative thereof (hereinafter may often be referred to as "modified polyolefin resin"), and reinforcing fibers.
The long fiber-reinforced thermoplastic resin pellets (component (A)) satisfy the following (A-1) to (A-4):
(A-1) The thermoplastic resin has a melt index (resin temperature: 230°C, load: 21.18 N) of 100 to 250 g/10 min.
(A-2) The thermoplastic resin has a relaxation time λ of 0.1 sec or less when an angular frequency w is 1 rad/sec, the relaxation time λ being calculated from a storage modulus G' and a loss modulus G" measured using a cone & plate rheometer.
(A-3) The long fiber-reinforced thermoplastic resin pellets have a reinforcing fiber content of 40 to 70 wt%.
(A-4) The long fiber-reinforced thermoplastic resin pellets have a modified polyolefin resin content of 1 to 5 wt%.

The thermoplastic resin included in the long fiber-reinforced thermoplastic resin pellets (component (A)) is not particularly limited as long as the (A-1) and (A-2) mentioned above are satisfied. For example, a polyolefin resin, a polystyrene resin, a polycarbonate resin, or the like may be used as the thermoplastic resin.
The term "polyolefin resin" used herein refers to a polyolefin resin produced by polymerizing at least one olefin. Examples of the olefin include α-olefins having 2 to 8 carbon atoms, such as ethylene, propylene, 1-butene, 1-pentene, 1-hexene, and 1-octene. Specific examples of the polyolefin resin include a polyethylene resin (e.g., ethylene homopolymer) and a polypropylene resin (e.g., propylene homopolymer and propylene-α-olefin copolymer). Examples of the propylene-α-olefin copolymer include an ethylene-propylene copolymer resin (e.g., ethylene-propylene block copolymer) and the like. Examples of the polystyrene resin include atactic polystyrene, syndiotactic polystyrene, and the like.
These thermoplastic resins may be used either individually or in combination.

The thermoplastic resin has a melt index (resin temperature: 230°C, load: 21.18 N) of 100 to 250 g/10 min, and preferably 100 to 150 g/10 min. If the melt index of the thermoplastic resin is less than 100 g/10 min, the reinforcing fibers may not be sufficiently opened during molding. If the melt index of the thermoplastic resin exceeds 250 g/10 min, the strength of the long fiber-reinforced thermoplastic resin pellets may decrease.

The melt index of the thermoplastic resin may be adjusted within the above range by adjusting the molecular weight of the thermoplastic resin by adjusting the hydrogen concentration or the like during polymerization, decomposing the thermoplastic resin using a peroxide, or blending or mixing (kneading) a resin having a different melt index with the thermoplastic resin when producing the thermoplastic resin, for example.
The amount of the peroxide may be determined by drawing a calibration curve by a mixing (kneading) method while changing the amount of the peroxide, and determining the relationship between the amount of the peroxide and the MI value.
The thermoplastic resin may be produced by a known production method such as the method of producing a polypropylene resin composition disclosed in JP-A-11-071431, JP-A-2002-234976, or JP-A-2002-249624, for example.

The thermoplastic resin has a relaxation time λ (=G÷(G"×ω)=G'÷G") of 0.1 sec or less (λ≤0.1 (sec)) when the angular frequency w is 1 rad/sec, the relaxation time λ being calculated from the storage modulus G' and the loss modulus G" measured using a cone & plate rheometer. If the relaxation time λ exceeds 0.1 sec, the resulting shaped product may have poor appearance.
The relaxation time λ is normally 0.01 to 0.1 sec, and preferably 0.02 to 0.05 sec.

The relaxation time λ is explained below.
When applying an external force to a system in an equilibrium state, and removing the external force after a new equilibrium state or a stationary state has been attained, the system returns to the initial equilibrium state due to the internal motion of the system. This phenomenon is referred to as a relaxation phenomenon, and a characteristic time constant which serves as a measure of the time required for relaxation is referred to as a relaxation time. When shaping a polymer, the polymer is melted, and the melted polymer is allowed to flow. In this case, the molecular chains of the polymer are stretched and oriented in the flow direction. However, the stress applied to the molecules of the polymer disappears when the polymer is cooled after the flow of the polymer has ended, and the molecular chains of the polymer move, and are randomly oriented (this is referred to as the "relaxation of molecular chain").

The relaxation time λ is expressed by λ=G'/ωG"=G'/G" when the angular frequency w is 10°=1 rad/sec.
Note that G' is the storage modulus that indicates the elastic properties of the thermoplastic resin, and G" is the loss modulus that indicates the viscous properties of the thermoplastic resin. As is clear from the above expression, the relaxation time λ increases as the storage modulus G' increases, and the content of elastic component in the thermoplastic resin increases. The relaxation time λ decreases as the loss modulus G" increases, and the content of viscous component in the thermoplastic resin increases (i.e., the thermoplastic resin has a low molecular weight and a narrow molecular weight distribution).

The relaxation time λ may be adjusted by the following methods.
(1) The molecular weight distribution of the thermoplastic resin is changed by decomposing the thermoplastic resin using a peroxide or the like. A resin having a short relaxation time λ is easily obtained by decomposing a resin having a high molecular weight by a high decomposition factor.
(2) A plurality of resin that differ in molecular weight distribution are mixed. It is effective to combine resins having a narrow molecular weight distribution that are produced using a highly active catalyst or a large amount of peroxide to increase the decomposition rate, for example.
(3) The polymerization conditions for multistep polymerization are adjusted. Note that this method may be industrially disadvantageous from the viewpoint of cost.
(4) An appropriate polymerization catalyst is selected.

The modified polyolefin resin that is modified with an unsaturated carboxylic acid or a derivative thereof included in the long fiber-reinforced thermoplastic resin (component (A)) includes a polyolefin resin and a functional group (e.g., carboxyl group or carboxylic anhydride group) included in the polyolefin resin. Examples of the polyolefin resin modified with an unsaturated carboxylic acid or a derivative thereof include the polyolefin resins mentioned above.
When using a polypropylene resin or a mixture thereof as the thermoplastic resin included in the long fiber-reinforced thermoplastic resin pellets, it is preferable to use a modified polypropylene resin as the modified polyolefin resin.
The term "modified polypropylene resin" used herein includes a modified propylene homopolymer, a modified propylene α-olefin random copolymer, a modified propylene-α-olefin block copolymer, and the like.

The polyolefin resin may be modified by graft modification or copolymerization.
Examples of the unsaturated carboxylic acid used for modification include acrylic acid, methacrylic acid, maleic acid, nadic acid, fumaric acid, itaconic acid, crotonic acid, citraconic acid, sorbic acid, mesaconic acid, angelic acid, phthalic acid, and the like. Examples of an unsaturated carboxylic acid derivative include carboxylic anhydrides, carboxylic acid esters, carboxylic acid amides, carboxylic acid imides, carboxylic acid metal salts, and the like. Specific examples of such an unsaturated carboxylic acid derivative include maleic anhydride, itaconic anhydride, citraconic anhydride, nadic anhydride, phthalic anhydride, methyl acrylate, methyl methacrylate, ethyl acrylate, butyl acrylate, monoethyl maleate, acrylamide, maleic acid monoamide, maleimide, N-butylmaleimide, sodium acrylate, sodium methacrylate, and the like. Among these, unsaturated dicarboxylic acids and derivatives thereof are preferable, and maleic anhydride or phthalic anhydride is particularly preferable.

The carboxylic acid content in the modified polyolefin resin is preferably 0.1 to 14 wt%, and more preferably 0.8 to 8 wt%. The acid content is determined by measuring the IR spectrum of the resin, and calculating the area of the peak at 1670 cm⁻¹ to 1810 cm⁻¹.

The polyolefin resin may be modified before producing the long fiber-reinforced thermoplastic resin pellets, or may be modified during a melt-mixing process employed when producing the long fiber-reinforced thermoplastic resin pellets.
When modifying the polyolefin resin before producing the long fiber-reinforced thermoplastic resin pellets, an appropriate amount of the acid-modified polyolefin resin is added to the thermoplastic resin when producing the long fiber-reinforced thermoplastic resin pellets.

When modifying the polyolefin resin during a melt-mixing process, the polyolefin resin and an unsaturated carboxylic acid or a derivative thereof are mixed in an extruder together with an organic peroxide, so that the unsaturated carboxylic acid or a derivative thereof is graft-copolymerized with the polyolefin resin.
Examples of the organic peroxide include benzoyl peroxide, lauroyl peroxide, azobisisobutyronitrile, dicumyl peroxide, t-butyl hydroperoxide, α,α'-bis(t-butylperoxydiisopropyl)benzene, bis(t-butyldioxyisopropyl)benzene, 2,5-dimethyl-2,5-di(t-butylperoxy)hexane, 2,5-dimethyl-2,5-di(t-butylperoxy)hexyne-3, di-t-butyl peroxide, cumene hydroperoxide, and the like.

The content of the modified polyolefin resin in the long fiber-reinforced thermoplastic resin pellets (component (A)) is 1 to 5 wt%, and preferably 1.5 to 3.5 wt%.
If the content of the modified polyolefin resin is less than 1 wt%, the strength of the long fiber-reinforced thermoplastic resin pellets may decrease due to a decrease in interfacial adhesion between the fibers and the resin. If the content of the modified polyolefin resin exceeds 5 wt%, the strength of the long fiber-reinforced thermoplastic resin pellets may decrease due to a decrease in molecular weight.
The modified polyolefin resin normally has a melt index (resin temperature: 230°C, load: 21.18 N) of 150 to 350 g/10 min.

Examples of the reinforcing fibers included in the long fiber-reinforced thermoplastic resin (component (A)) include, but are not limited to, organic fibers (e.g., carbon fibers and nylon fibers) and inorganic fibers (e.g., basalt fibers and glass fibers). Among these, glass fibers are preferable.
Examples of the glass fibers include filament fibers produced by melt spinning glass such as electrical glass (E glass), chemical glass (C glass), alkali glass (A glass), high-strength glass (S glass), or alkali-resistant glass.

A continuous glass fiber bundle may be used as the raw material for long glass fibers. The continuous glass fiber bundle is commercially available as glass roving. The average fiber diameter is normally 3 to 30 µm, the number of filaments is normally 400 to 10,000, and the tex yarn count is normally 300 to 20,000 g/km. The average fiber diameter is preferably 13 to 20 µm, and the number of filaments is preferably 1000 to 6000. The average fiber diameter is more preferably 16 to 18 µm, and the number of filaments is more preferably 3000 to 5000.
Note that a plurality of fiber bundles may be bundled, and used as the raw material for long glass fibers (see JP-A-6-114830).

The length of the reinforcing fibers included in the pellets is normally 4 to 8 mm, and preferably 5 to 7 mm. The diameter of the reinforcing fibers included in the pellets is preferably 10 to 20 µm, and more preferably 13 to 18 µm.

The content of the reinforcing fibers in the long fiber-reinforced thermoplastic resin pellets (component (A)) is 40 to 70 wt%, and preferably 45 to 60 wt%.
If the content of the reinforcing fibers is less than 40 wt%, the productivity may decrease. If the content of the reinforcing fibers exceeds 70 wt%, the amount of unopened glass fibers may increase due to an increase in the amount of glass fibers.

The surface of the reinforcing fibers may be provided with a functional group using a surface treatment method such as electrolysis or a treatment with a sizing agent. It is preferable to employ a surface treatment with a sizing agent. It is particularly preferable to use a sizing agent including a coupling agent. The reinforcing fibers that are surface-treated by such a method exhibit adhesion to the thermoplastic resin, so that a shaped product that exhibits excellent strength and good appearance can be obtained.

Examples of the sizing agent include the sizing agent including a coupling agent disclosed in JP-A-2003-253563.
A silane coupling agent (e.g., aminosilane or epoxysilane) or a titanium coupling agent may be appropriately selected as the coupling agent.

It is also preferable to use a sizing agent including a coupling agent and a resin emulsion that facilitates handling.
Examples of the resin emulsion included in the sizing agent include a urethane emulsion, an olefin emulsion, an acrylic emulsion, a nylon resin emulsion, a butadiene emulsion, an epoxy emulsion, and the like. Among these, a urethane emulsion or an olefin emulsion is preferable. A urethane sizing agent normally contains a polyisocyanate obtained by subjecting a diisocyanate compound and a polyhydric alcohol to a polyaddition reaction in an amount of 50 wt% or more. A single-component urethane sizing agent (e.g., oil-modified, moisture-curable, or block urethane sizing agent) or a two-component urethane sizing agent (e.g., catalyst-curable or polyol-curable urethane sizing agent) may be used. The urethane sizing agent is commercially available as Vondic and Hydran (manufactured by DIC Corporation), for example.
An aqueous urethane such as a modified polyolefin resin modified with an unsaturated carboxylic acid or a derivative thereof may be used as the olefin sizing agent.

The long fiber-reinforced thermoplastic resin pellets (component (A)) including the thermoplastic resin, the modified polyolefin resin, and the reinforcing fibers may be produced by a pulling method or the like. The components may be separately melt-mixed, and then (mixed) blended.
Since the long fiber-reinforced thermoplastic resin pellets ensure that the fibers included in the composition have a high aspect ratio, a composition that exhibits high strength can be easily obtained.

The long fiber-reinforced thermoplastic resin pellets normally have a pillar shape.
The length of the long fiber-reinforced thermoplastic resin pellets is preferably 4 mm to 8 mm, and more preferably 5 mm to 7 mm. If the length of the long fiber-reinforced thermoplastic resin pellets is less than 4 mm, an improvement in rigidity, heat resistance, and impact strength may be insufficient, and warping and deformation may occur to a large extent. If the length of the long fiber-reinforced thermoplastic resin pellets exceeds 8 mm, molding may be difficult.
In the invention, it is preferable that the reinforcing fibers having almost the same length (4 mm to 8 mm) be oriented almost parallel to each other in the long fiber-reinforced thermoplastic resin pellets.

The long fiber-reinforced thermoplastic resin pellets may be easily obtained by introducing a roving of several thousands of reinforcement fibers into an impregnation die, allowing the space between the filaments to be uniformly impregnated with the molten polyolefin resin, and cutting the resulting product to a given length.
For example, a molten resin is supplied from an extruder to an impregnation die provided at the tip of the extruder, and a continuous glass fiber bundle is passed through the molten resin so that the glass fiber bundle is impregnated with the molten resin. The glass fiber bundle is then withdrawn through a nozzle, and pelletized to a given length. The length of the pellets may be adjusted by adjusting the rotational speed of a pelletizer when continuously cooling the molded fiber/resin strands, and introducing (drawing) the fiber/resin strands into the pelletizer. It is also possible to dry-blend the polyolefin resin, an unsaturated carboxylic acid or an unsaturated carboxylic anhydride, an organic peroxide, and the like, and supply the blend to the hopper of an extruder to effect modification.

The impregnation method is not particularly limited. For example, a method that passes a roving through a resin powder fluidized bed, and heats the roving to a temperature higher than the melting point of the resin (JP-A-46-4545), a method that impregnates a reinforced fiber roving with a molten thermoplastic resin using a cross-head die (JP-A-62-60625, JP-A-63-132036, JP-A-63-264326, and JP-A-1-208118), a method that mixes resin fibers and a reinforced fiber roving, and heats the mixture to a temperature higher than the melting point of the resin to effect impregnation (JP-A-61-118235), a method that disposes a plurality of rods inside a die, winds a roving around each rod in a zig-zag manner to open the fibers, and impregnates the roving with a molten resin (JP-A-10-264152), a method that passes a roving through the space between a pair of fiber-opening pins so that the roving does not come in contact with the pins (WO97/19805), or the like may be used.

An extruder having two or more feeding sections may be used when melting the resin. In this case, the resin and a decomposition agent for the resin (preferably an organic peroxide when using a polypropylene resin) may be supplied through the top feeding section, and another resin may be supplied through the side feeding section.
It is also possible to use two or more extruders, and supply the resin and a decomposition agent for the resin (preferably an organic peroxide when using a polypropylene resin) to one or more extruders among the two or more extruders.
It is also possible to supply the resin, an unsaturated carboxylic acid or a derivative thereof, and a decomposition agent (preferably an organic peroxide when using a polypropylene resin) to at least one area of the extruder.

### (2) Component (B)

The long fiber-reinforced resin composition according to the invention includes the polyolefin resin (component (B)) that satisfies the following (B-1) to (B-2):
(B-1) The polyolefin resin has a melt index (resin temperature: 230°C, load: 21.18 N) of 20 to 70 g/10 min.
(B-2) The polyolefin resin has a relaxation time λ of 0.23 sec or less when the angular frequency w is 1 rad/sec, the relaxation time λ being calculated from the storage modulus G' and the loss modulus G" measured using a cone & plate rheometer.

The polyolefin resin used as the component (B) is not particularly limited as long as the conditions (B-1) and (B-2) are satisfied. Any of the polyolefin resins described above in connection with the component (A) (e.g., polyethylene resin (e.g., low-density polyethylene (LDPE) and ethylene-α-olefin copolymer) and polypropylene resin) may be used as the polyolefin resin used as the component (B). It is preferable to use a polypropylene resin.
The term "polypropylene resin" used herein includes a propylene homopolymer, a propylene-α-olefin random copolymer, a propylene-α-olefin block copolymer, and the like.

The polyolefin resin has a melt index (resin temperature: 230°C, load: 21.18 N) of 20 to 70 g/10 min, and preferably 20 to 60 g/10 min. If the melt index of the polyolefin resin is less than 20 g/10 min, the fluidity of the resin composition may decrease, so that the die transferability may decrease. If the melt index of the polyolefin resin exceeds 70 g/10 min, the amount of unopened glass fibers may increase.
The melt index of the polyolefin resin may be adjusted within the above range using any of the methods described above in connection with the component (A).

The polyolefin resin has a relaxation time λ (=G'÷G"×ω), i.e. G'÷G", of 0.23 sec or less (λ≤0.23 sec) when the angular frequency w is 1 rad/sec, the relaxation time A being calculated from the storage modulus G' and the loss modulus G" measured using a cone & plate rheometer. If the relaxation time A exceeds 0.23 sec, the amount of unopened glass fibers may increase. Moreover, it may be difficult to mold a large automotive shaped product.
The relaxation time λ of the polyolefin resin is normally 0.01 to 0.23 sec, and preferably 0.05 to 0.22 sec.
The definition of the relaxation time A is the same as described above in connection with the component (A), and the relaxation time λ may be adjusted by any of the methods described above in connection with the component (A).

### (3) Component (C)

The component (C) includes the following components (C-1) to (C-3), and may optionally include the following components (C-4) and/or (C-5).
(C-1) Zinc sulfide
(C-2) Hindered amine-based light stabilizer
(C-3) Phenol-based antioxidant and/or phosphorus-based antioxidant
(C-4) Organic pigment
(C-5) At least one light absorber selected from benzoate-based light absorber, benzotriazole-based light absorber, and alkyl benzoate-based light absorber

Zinc sulfide used as the component (C-1) is a white pigment. Zinc sulfide is used to reduce breakage of the reinforcing fibers. A commercially available product may be used as zinc sulfide. For example, SACHTOLITH L, HD, HD-S (all manufactured by Sachtleben Chemie Gmbh) or the like may be used.
The organic pigment used as the component (C-4) is mainly used corresponding to a color other than white.

Zinc sulfide is used in an amount of 0.1 to 10 parts by weight, preferably 0.1 to 3 parts by weight, and particularly preferably 0.5 to 1.5 parts by weight, based on 100 parts by weight of the components (A) and (B) in total.
The average particle size of zinc sulfide is preferably 0.1 to 1 µm, and particularly preferably 0.2 to 0.8 µm. If the average particle size of zinc sulfide is less than 0.1 µm, the dispersibility of the pigment may deteriorate. If the average particle size of zinc sulfide exceeds 1 µm, it may be difficult to implement sufficient toning.

The purity of zinc sulfide is preferably 90 wt% or more, and particularly preferably 95 wt% or more. If the purity of zinc sulfide is less than 90 wt%, the weatherability of the resulting shaped product may deteriorate.

A compound shown by the following formula (1) may be used as the hindered amine-based light stabilizer (component (C-2)). 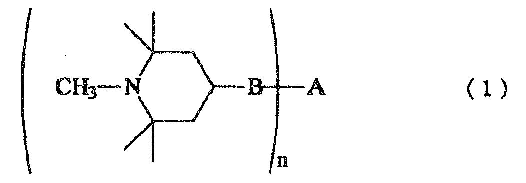 wherein n an integer from 1 to 10, A represents a residue obtained by eliminating n OH groups from a (poly)carboxylic acid compound, or a residue obtained by eliminating n OH groups from a (poly)cyanuric acid compound, and B represents an oxygen atom, -NH-, or -NR'- (wherein R' represents an alkyl group having 1 to 8 carbon atoms).

Specific examples of the hindered amine-based light stabilizer shown by the formula (1) include N-methyl hindered amines such as 1,2,2,6,6-pentamethyl-4-piperidyl stearate, bis(1,2,2,6,6-pentamethyl-4-piperidyl) sebacate, 1,2,2,6,6-pentamethyl-4-piperidyl methacrylate, tetrakis(1,2,2,6,6-pentamethyl-4-piperidyl)-1,2,3,4-butane tetracarboxylate, bis(1,2,2,6,6-pentamethyl-4-piperidyl)-2-butyl-2-(3,5-di-t-butyl-4-hydroxybenzyl) malonate, 3,9-bis[1,1-dimethyl-2-{tris(1,2,2,6,6-pentamethyl-4-piperidyloxy carbonyl)butylcarbonyloxy}ethyl]-2,4,8,10-tetraoxaspiro[5.5]undecane, bis(1,2,2,6,6-pentamethyl-4-piperidyl)·di(tridecyl)-1,2,3,4-butane tetracarboxylate, 1,5,8,12-tetrakis[2,4-bis(N-butyl-N-(1,2,2,6,6-pentamethyl-4-piperidyl)amino)-s-triazin-6-yl]-1,5,8,12-tetraa zadodecane, and 1,6,11-tris[2,4-bis(N-butyl-N-(1,2,2,6,6-pentamethyl-4-piperidyl)amino)-s-triazin-6-ylamino]undecane.

Examples of hindered amine compounds other than the hindered amine compounds shown by the formula (1) include NH hindered amines such as 2,2,6,6-tetramethyl-4-piperidyl stearate, 2,2,6,6-tetramethyl-4-piperidyl benzoate, bis(2,2,6,6-tetramethyl-4-piperidyl)sebacate, bis(1-octoxy-2,2,6,6-tetramethyl-4-piperidyl)sebacate, 2,2,6,6-tetramethyl-piperidyl methacrylate, tetrakis(2,2,6,6-tetramethyl-4-piperidyl)-1,2,3,4-butane tetracarboxylate, bis(1,2,2,6,6-pentamethyl-4-piperidyl)·di(tridecyl)-1,2,3,4-butane tetracarboxylate, and 3,9-bis[1,1-dimethyl-2-{tris(2,2,6,6-tetramethyl-4-piperidyloxycarbonyloxy)butylcarbonyloxy}ethyl]-2,4,8,10 -tetraoxaspiro[5.5]undecane.

The component (C-2) is used in an amount of 0.01 to 1.0 parts by weight, and preferably 0.1 to 0.5 parts by weight, based on 100 parts by weight of the components (A) and (B) in total.
The weight ratio ((C-2):(C-5)) of the component (C-2) to the component (C-5) is preferably 3:1 to 1:3.

Examples of the phenol-based antioxidant used as the component (C-3) include 2,6-di-t-butyl-4-methylphenol, 1,3,5-tris(3,5-di-t-butyl-4-hydroxybenzyl) isocyanurate, tetrakis[3-(3,5-di-t-butyl-4-hydroxyphenyl)propionyloxymethyl]methane, and the like. It is preferable to use a hindered phenol compound as the phenol-based antioxidant. Examples of the hindered phenol compound include 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphnate, 2,2'-methylenebis(4-methyl-6-t-butylphenol), 2,2'-methylenebis(4-ethyl-6-t-butylphenol), bis[3,3-bis(4-hydroxy-3-t-butylphenyl)butyric acid] glycol ester, 4,4'-butylidenebis(6-t-butyl-m-cresol), 2,2'-ethylidenebis(4,6-di-t-butylphenol), 2,2'-ethylidenebis(4-sec-butyl-6-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3,5-di-t-butyl-4-hydroxyphenyl)propionate]methane, 2-t-butyl-4-methyl-6-(2'-acryloyloxy-3'-t-butyl-5'-methylbenzyl)phenol, 3,9-bis(1',1'-dimethyl-2'-hydroxyethyl)-2,4,8,10-tetraoxaspiro[5,5]undecane, bis[β-(3-t-butyl-4-hydroxy-5-methylphenyl)propionate, and the like.

Examples of the phosphorus-based antioxidant used as the component (C-3) include tris(nonylphenyl) phosphite, tris(mono-,di-nonylphenyl)phosphite, tris(2,4-di-t-butylphenyl) phosphite, tris(2,5-di-t-butylphenyl)phosphite, tetra(C₁₂-₁₅-alkyl)·bisphenol A diphosphite, tetra(tridecyl)-4,4'-butylidenebis(3-methyl-6-t-butylphenol)diphosphite, hexa(tridecyl)-1,1,3-tris(2-methyl-5-t-butyl-4-hydroxyphenyl)butane triphosphite, distearylpentaerythritol diphosphite, bis(2,4-di-t-butylphenyl)pentaerythritol diphosphite, bis(2,6-di-t-butyl-4-methylphenyl)pentaerythritol diphosphite, bis(2,4-dicumylphenyl)pentaerythritol diphosphite, 2,2'-ethylidenebis(4,6-di-t-butylphenyl)fluorophosphite, 2,2'-methylenebis(4,6-di-t-butylphenyl)octyl phosphite, tetrakis(2,4-di-t-butylphenyl)biphenylene diphosphonate, and the like.

The component (C-3) is used in an amount of 0.01 to 1.0 parts by weight, and preferably 0.05 to 0.5 parts by weight, based on 100 parts by weight of the components (A) and (B) in total.
Note that it is preferable to use the phenol-based antioxidant and the phosphorus-based antioxidant in combination. The weight ratio (phenol-based antioxidant:phosphorus-based antioxidant) of the phenol-based antioxidant to the phosphorus-based antioxidant is preferably 3:1 to 1:3.

The organic pigment used as the component (C-4) may be appropriately used so that the shaped product has a desired color. A pigment having hardness lower than that of the reinforcing fibers (glass fibers) is used as the organic pigment. Examples of a black organic pigment include carbon black.
Specific examples of other organic pigments include azo pigments, phthalocyanine pigments, fused polycyclic pigments, and the like. Examples of the azo pigments include azo lake pigments such as Lake Red C, Watching Red, and Brilliant Carmin 6B, benzimidazolone pigments such as Hostaperm Yellow H4G, Novaperm Yellow H2G, Novaperm Red HFT, PV Fast Yellow HG, PV Fast Yellow H3R, PV Bordeaux HF3R, PV Carmine HF4C, PV Red HF2B, PV Fast Maroon HMF01, and PV Fast Brown HFR, diarylide pigments such as Diarylide Yellow, Diarylide Orange, Pyrazolone Red, and PV Fast Yellow HR, fused azo pigments such as Chromophthal Yellow 8GN, CromophtalYellow 6G, Cromophtal Yellow 3G, Cromophtal Yellow GR, Cromophtal Orange 4R, Cromophtal Orange GP, Cromophtal Scarlet RN, Cromophtal Red G, Cromophtal Red BRN, Cromophtal Red BG, Cromophtal Red 2B, and Cromophtal Brown 5R, and the like. Examples of the phthalocyanine pigments include Phthalocyanine Blue, Phthalocyanine Green, and the like. Examples of the fused polycyclic pigments include quinacridone pigments such as PV Fast Pink E, Cinquasia Red B, and Cinquasia Red Y, isoindolinone pigments such as Irgazin Yellow 2GLT, Irgazin Yellow 3RLTN, Cromophtal Orange 2G, and Pigment Yellow, perylene pigments such as Perylene Red, Perylene Maroon, and Perylene Scarletperinone pigments such as Perinone Orange, dioxazine pigments such as Dioxazine Violet, anthraquinone pigments such as Filester Yellow RN, Cromophtal Red A3B, and Threne Blue, quinophthalone pigments such as Paliotol Yellow L0960HG, and the like.

The component (C-4) is used in an amount of 0 to 10 parts by weight, and preferably 0.01 to 3 parts by weight, based on 100 parts by weight of the components (A) and (B) in total.
The total amount of pigments (i.e., the total amount of the components (C-1) and (C-4)) is preferably 0.1 to 10 parts by weight.

Examples of the benzoate-based light absorber used as the component (C-5) include 2,4-di-t-butylphenyl-3,5-di-t-butyl-4-hydroxybenzoate, hexadecyl 3,5-di-t-butyl-4-hydroxybenzoate, and the like.

Examples of the benzotriazole-based light absorber include 2-(2H-benzotriazol-2-yl), 4-methyl-6-(t-butyl)phenol, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(5-methyl-2-hydroxyphenyl)benzotriazole, 2-(3,5-di-t-butyl-2-hydroxyphenyl)benzotriazole, 2-(2-hydroxy-5-t-octylphenyl)benzotriazole, 2-(2-hydroxy-3,5-di-t-amylphenyl)benzotriazole, and the like.

Examples of the alkyl benzoate-based light absorber include compounds shown by the following formula (2). 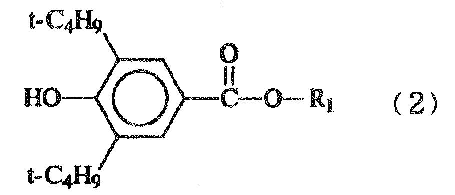 wherein R₁ represents an alkyl group having 1 to 30 carbon atoms.

Examples of the alkyl group represented by R₁ include methyl, ethyl, propyl, isopropyl, butyl, isobutyl, sec-butyl, t-butyl, pentyl, t-pentyl, hexyl, heptyl, octyl, t-octyl, 2-ethylhexyl, nonyl, decyl, undecyl, dodecyl, tridecyl, tetradecyl, pentadecyl, hexadecyl, heptadecyl, octadecyl, behenyl, triacontyl, and the like.

Specific examples of the alkyl benzoate compounds shown by the formula (2) include, but are not limited to, the following compounds.

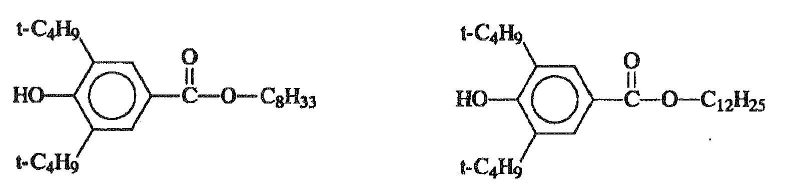

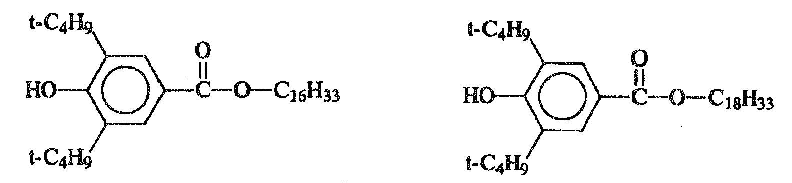

The component (C-5) is used in an amount of 0.01 to 1.0 parts by weight, and preferably 0.05 to 0.5 parts by weight, based on 100 parts by weight of the components (A) and (B) in total.

It is preferable to use the alkyl benzoate compounds (component (C-5)), the hindered amine compound (component (C-2)), the phenol-based antioxidant, and the phosphorus-based antioxidant in combination since discoloration due to light or rain water can be suppressed.

The components (C-1) to (C-5) may be added to (dry-blended with) the components (A) and (B), or may be added as a masterbatch prepared by mixing the components (C-1) to (C-5) with a base resin. It is preferable to use a polyolefin resin (preferably polypropylene) as the base resin. The melt index (MI) of the base resin is normally 30 to 300 g/10 min.
When adding the component (C) as a masterbatch, the component (C) is preferably used in an amount of 0.2 to 10 parts by weight based on 100 parts by weight of the components (A) and (B) in total. Note that the content of the base resin used to prepare the masterbatch is excluded from the content of the components (A) and (B) when calculating the content of each component of the composition.

The long fiber-reinforced resin composition according to the invention includes the components (A) to (C), and has a content of the component (A) of 50 to 90 wt% and a content of the component (B) of 10 to 50 wt% based on the total content of the components (A) and (B). The long fiber-reinforced resin composition preferably has a content of the component (A) of 50 to 80 wt% and a content of the component (B) of 20 to 50 wt% based on the total content of the components (A) and (B).

The long fiber-reinforced resin composition according to the invention has a reinforcing fiber content of 20 to 60 wt%, preferably 20 to 50 wt%, and particularly preferably 20 to 40 wt%, based on the total content of the components (A) and (B).
If the reinforcing fiber content is less than 20 wt%, the strength of the resulting shaped product may be insufficient. If the reinforcing fiber content exceeds 60 wt%, the appearance of the resulting shaped product may deteriorate.

The long fiber-reinforced resin composition according to the invention may consist substantially of the components (A) to (C), or may consist only of the components (A) to (C). The expression "consists substantially of" means that the composition consists mainly of the components (A) to (C), and may further include the following additives.

Examples of the additives include an antistatic agent, a copper inhibitor, a nucleator, a blowing agent, a filler (e.g., talc, mica, and carbon graphite), and the like. The additives may be added when producing the long fiber-reinforced thermoplastic resin pellets, or may be added when producing a shaped product. The additives may be added as a masterbatch.

The long fiber-reinforced resin composition according to the invention may be produced by an arbitrary method. For example, the long fiber-reinforced resin composition may be produced by dry-blending or melt-mixing. The production conditions are not particularly limited. The production conditions may be appropriately adjusted depending on the based of material and the like.
When dry-blending the components (A) to (C), it is preferable to supply the mixture directly to an injection molding machine or the like in order to maintain the length of the fibers included in the composition, and improve the rigidity, impact resistance, and durability.

Various molded bodies may be produced by molding the long fiber-reinforced resin composition according to the invention.
The long fiber-reinforced resin composition according to the invention may be molded by an arbitrary method such as injection molding, extrusion molding, hollow molding, compression molding, injection-compression molding, gas-assisted injection molding, or foam injection molding. Among these, injection molding, compression molding, and injection-compression molding are preferable.
In particular, a shaped product having good appearance may be obtained by injection molding.

According to the invention, since the resin included in the long fiber-reinforced thermoplastic resin pellets (component (A)) and the diluent resin (component (B)) differ in viscosity, the dispersibility of the fibers is improved by melt-mixing the composition inside a cylinder.
When filling a die with the resin composition according to invention, the resin composition is instantaneously solidified due to a short relaxation time. Therefore, since the fibers rarely appear on the surface of the product, the appearance of the shaped product can be improved.
According to the invention, zinc sulfide is used as a white pigment taking account of the properties of the shaped product, and an organic pigment is used for a color other than white. Since zinc sulfide has a Mohs hardness lower than that of the reinforcing fibers (glass fibers), the fibers rarely break inside a cylinder. Therefore, since the fibers included in the shaped product have a long length, the properties of the shaped product can be improved.

### EXAMPLES

The invention is further described below by way of examples. Note that the invention is not limited to the following examples.
The parameters of the resin were measured by the following methods.

### [Melt index (MI)]

The melt index (MI) of the resin was measured at a resin temperature of 230°C and a load of 21.18 N in accordance with JIS K 7210-1999.

### [Storage modulus (G'), loss modulus (G"), and relaxation time (A)]

The storage modulus (G'), the loss modulus (G"), and the relaxation time (λ) of the resin were measured using a cone & plate rheometer under the following conditions.
Instrument: system-4 manufactured by Rheometrix
Shape of measurement section: cone & plate shape
Measurement conditions: 175°C, strain 30% (sine-wave strain)
The storage modulus (G') and the loss modulus (G") were measured under the above conditions, and the relaxation time A (sec) = G'÷ G"xw =G'÷G" when the angular frequency w (i.e., the angular frequency of the sine-wave strain applied to the disk) was 1 rad/sec was calculated.

Note that the details of measurement using a cone & plate rheometer are disclosed in Seikei-Kakou, 1 (4), 355 (1989), Kobunshi Jikkengaku, Vol. 9, Mechanical Properties 1, Kyoritsu Shuppan Co., Ltd. (1982), JP-A-2003-226791, and the like.

### Production Example [production of long fiber-reinforced thermoplastic resin pellets]

Two types of long fiber-reinforced thermoplastic resin pellets (P-1 and P-2) were produced using a pellet production apparatus shown in FIG. 1.
In FIG. 1, reference numeral 10 indicates a die, reference numeral 20 indicates an extruder that supplies a molten thermoplastic resin to the die 10, reference numeral 30 indicates a roll corresponding to a fiber bundle F, reference numeral 40 indicates tension rolls that apply a given tension to the fiber bundles F drawn into the die 10, reference numeral 50 indicates a cooling means that cools a molten resin-impregnated fiber bundle drawn out from the die 10, reference numeral 60 indicates a fiber bundle pull-out roll, and reference numeral 70 indicates a pelletizer that cuts the molten resin-impregnated fiber bundle to produce long fiber-reinforced thermoplastic resin pellets. The apparatus shown in FIG. 1 is configured so that three independent fiber bundles F are simultaneously impregnated with a molten resin.

The following production conditions were employed.
Die: A die provided at the tip of an extruder (diameter: 50 m) was used. Four rods were linearly disposed in the impregnation section.
Fiber bundle: Glass roving obtained by bundling 4000 glass fibers (diameter: 16 µm) surface-treated with aminosilane
Preheating temperature: 200°C
Thermoplastic resin and modified polyolefin resin: PP-A (propylene homopolymer) or PP-B (propylene homopolymer) and PP-E (maleic anhydride-modified polypropylene, maleic anhydride content: 2 wt%, "H-1100P" manufactured by Prime Polymer Co., Ltd.) were blended and melted in a ratio shown in Table 2.
Melting temperature: 280°C
Rod: Four, 6 mm (diameter) × 3 mm (length)
Inclination angle: 25°

Note that PP-A refers to a propylene homopolymer obtained by adding 0.1 wt% of bis(tert-butyldioxyisopropyl)benzene ("Perkadox 14" manufactured by Kayaku Akzo Corporation) (peroxide) to a propylene homopolymer ("Y-6005GM" manufactured by Prime Polymer Co., Ltd.), and melt-mixing the mixture.

The fiber bundle was supplied to the die and impregnated with the resin while adjusting the amount of fiber bundle using the tension rolls. The fiber bundle was then removed from the die, cooled, and supplied to the pelletizer to obtain long fiber-reinforced thermoplastic resin pellets having a length of 6 mm.

**TABLE 1**

| | | Grade^{*} | Peroxide^{**} | MI | A |
|---|---|---|---|---|---|
| | | | (wt%) | (g/10 min) | (sec) |
| PP-A | Propylene homopolymer | L-5090P | 0.1 | 120 | 0.03 |
| PP-B | Propylene homopolymer | L-5070P | 0 | 120 | 0.2 |
| PP-E | Maleic anhydride-modified polypropylene (maleic anhydride content: 2 wt%) | H-1100P | 0 | 200 | - |

| | | | | | |
|---|---|---|---|---|---|
| ^{*} Manufactured by Prime Polymer Co., Ltd. ^{**} Bis(tert-butyldioxyisopropyl)benzene ("Perkadox 14" manufactured by Kayaku Akzo Corporation) | | | | | |

**TABLE 2**

| Long fiber-reinforced thermoplastic resin pellets | P-1 | P-2 |
|---|---|---|
| Thermoplastic resin | PP-A | PP-B |
| Modified polyolefin resin | PP-E | PP-E |
| Diameter of glass fibers | 16 µm | 16 µm |
| Glass fiber content (wt%) | 50 | 50 |
| Modified polyolefin content (wt%) | 2.5 | 2.5 |

### Example 1

The long fiber-reinforced thermoplastic resin pellets (P-1: component (A)) obtained in the Production Example, a polyolefin resin (component (B)), and a masterbatch containing zinc sulfide and the like (component (C)) were blended in a ratio shown in Table 3 to prepare a long fiber-reinforced resin composition.
A masterbatch (diluent resin: polypropylene, MI=61 g/10 min) containing additives shown in Table 3 was added as the component (C). The composition of the masterbatch (content per 3 parts by weight) is shown in Table 3.

The composition thus produced was introduced into an injection molding machine ("AZ7000" manufactured by Nissei Plastic Industrial Co, Ltd.) to obtain ten tabular shaped products (200×180×3 mm).
A film gate was used as the die of the injection molding machine, and a full-flight screw was used as the screw of the injection molding machine. The composition was molded at a resin temperature of 250°C, a die temperature of 45°C, and an injection rate of 20 mm/sec.

### Examples 2 to 6 and Comparative Examples 1 and 2

A composition and a shaped product were obtained in the same manner as in Example 1, except that the composition was produced using the components in a ratio shown in Table 3.

**TABLE 3**

| Component | | | Example 1 | Example 2 | Example 3 | Example 4 | Example 5 | Example 6 | Comparative Example 1 | Comparative Example 2 |
|---|---|---|---|---|---|---|---|---|---|---|
| (A) | P-1 | | 60 | 60 | 60 | 60 | 60 | 60 | | 60 |
| | P-2 | wt% | | | | | | | 60 | |
| (B) | J-3000GV | | 40 | 40 | 40 | 40 | 40 | | 40 | 40 |
| | Y-6005GM/Y900GV | wt% | | | | | | 40 | | |
| (C) | Masterbatch containing ZnS and the like | Parts by weight | 3 | 3 | 3 | 3 | 3 | 3 | 3 | 3 |
| Component (C): Content (parts by weight) based on 100 parts by weight of components (A) and (B) | | | | | | | | | | |
| C-1 | Zinc sulfide | | 1 | 1 | 1 | 1 | 1 | 1 | 1 | 1 |
| C-2 | NH hindered amine-based light stabilizer | | 0 | 0 | 0.15 | 0.15 | 0.15 | 0.15 | 0.15 | 0 |
| | N-methyl hindered amine-based light stabilizer | | 0.2 | 0.4 | 0 | 0 | 0 | 0 | 0 | 0 |
| C-3 | Hindered phenol antioxidant A | | 0 | 0 | 0 | 0 | 0.1 | 0 | 0 | 0 |
| | Hindered phenol antioxidant B | | 0.1 | 0.1 | 0.1 | 0.1 | 0 | 0.1 | 0.1 | 0.1 |
| | Phosphorus-based antioxidant | | 0.1 | 0.1 | 0.1 | 0.1 | 0.1 | 0.1 | 0.1 | 0.1 |
| C-4 | Pigment Yellow 110 | | 0.1 | 0.1 | 0.1 | 0.1 | 0.1 | 0.1 | 0.1 | 0.1 |
| C-5 | Benzoate-based light absorber | | 0 | 0 | 0 | 0 | 0.15 | 0 | 0 | 0 |
| | Benzotriazole-based light absorber | | 0 | 0 | 0.1 | 0 | 0 | 0 | 0 | 0 |
| | Alkyl benzoate-based light absorber | | 0 | 0 | 0 | 0.1 | 0 | 0.1 | 0 | 0 |

The details of each component shown in Table 3 are given below.

### Component (A)

The pellets (P-1 or P-2) obtained in the Production Example were used.

### Component (B)

J-3000GV
Prime Polypro J-3000GV manufactured by Prime Polymer Co., Ltd. (MI= 30 g/10 min, relaxation time A: 0.22 sec)
Y-6005GM/Y900GV
Prime Polypro Y-6005GM manufactured by Prime Polymer Co., Ltd.
Prime Polypro Y900GV manufactured by Prime Polymer Co., Ltd.
Blend of Y-6005GM (30 parts by weight) and Y900GV (70 parts by weight) (MI= 20 g/10 min, relaxation time A: 0.20 sec)

### Component (C)

(1) Component (C-1)
   Zinc sulfide
   SACHTOLITH HD-S manufactured by Sachtleben Chemie Gmbh, purity: 98 wt%, average particle size: 0.3 µm (precipitation method)
(2) Component (C-2)
   NH hindered amine-based light stabilizer
   Tin770 manufactured by Ciba Japan [bis(2,2,6,6-tetramethyl-4-piperidyl) sebacate]
   N-methyl hindered amine-based light stabilizer
   LA502 manufactured by Adeka Corporation
(3) Component (C-3)
   Hindered phenol-based antioxidant A
   AO20 manufactured by Adeka Corporation [tris(3,5-di-butyl-4-hydroxybenzole) isocyanurate] Hindered phenol antioxidant B
   Irg1010 manufactured by Ciba Japan
   [tetrakis[3-(3,5-di-t-butyl-4-hydroxyphenyl)propionyloxymethyl]methane]
   Phosphorus-based antioxidant
   Irg168 manufactured by Ciba Japan [tris(2,5-di-t-butylphenyl) phosphate]
(4) Component (C-5)
   Benzoate-based light absorber
   Tin120 manufactured by Ciba Japan [2,4-di-t-butylphenyl 3,5-di-t-butylhydroxybenzoate] Benzotriazole-based light absorber
   Tin326 manufactured by Ciba Japan [2-(2H-benzotriazol-2-yl)-4-methyl-6-(t-butyl)phenol]
   Alkyl benzoate-based light absorber
   Cyasorb UV2908 manufactured by Cytec [3,5-di-t-butyl-4-hydroxybenzoic acid, n-hexadecyl ester]

### [Evaluation of shaped product]

The following items were evaluated using the resulting the shaped product. The results are shown in Table 4.

### (1) Unopened glass fiber (GF) index

The number of unopened areas of the shaped product was counted with the naked eye. In order to standardize the ratio of the number of unopened areas of the shaped product (B) obtained in each example other than Example 1 and each comparative example to the number of unopened areas of the shaped product (A) obtained in Example 1 (=100) was calculated (unopened fiber index = (number of unopened areas of shaped product (B)) ÷ (number of unopened areas of shaped product (A)) × 100).
A case where unopened fibers could not be clearly observed was evaluated as "Acceptable", and a case where unopened fibers were clearly observed was evaluated as "Unacceptable".

### (2) Evaluation of weatherability

A weatherability test was performed using a weatherometer with or without taking account of the effects of rain.

### (a) Test taking account of effects of rain

### Instrument: sunshine weatherometer

Black panel temperature: 63°C (water was sprayed to the sample for 12 minutes during a 60-minute test period)

### (b) Test without taking account of effects of rain

### Instrument: xenon weatherometer

Black panel temperature: 83°C, applied energy: 60 W/m²
The test was performed for 100 to 500 hours under the above conditions using the above apparatus to evaluate a change in color of the sample.
Sample: 70 mm×35 mm×3 mm t
Color difference: The color difference was evaluated using a spectrocolorimeter ("CM-3600d" manufactured by Konica Minolta Sensing, Inc.).

### Index of weatherability (light resistance) evaluation

ΔE: square root of the sum of squares of ΔL, Δa, and Δb (ΔL: brightness, Δa: red-green intensity, Δb: yellow-blue intensity)
A positive ΔL value indicates that the brightness was higher than that of the sample that was not subjected to the weatherability test, and a negative ΔL value indicates that the brightness was lower than that of the sample that was not subjected to the weatherability test.
A positive Δa value indicates red, a negative Δa value indicates green, a positive Δb value indicates yellow, and a negative Δb value indicates blue.
A case where the sample subjected to the weatherability test (taking account of the effects of rain) had excellent appearance is indicated by "Acceptable", a case where the sample subjected to the weatherability test had generally good appearance is indicated by "Fair", and a case where the sample subjected to the weatherability test had poor appearance is indicated by "Unacceptable".

### (3) Mechanical properties

### (a) Tensile strength at break

The tensile strength at break was measured in accordance with ISO 527-1.

### (b) Flexural modulus

The flexural modulus was measured in accordance with ISO 178.

### (c) Charpy impact strength (with notch)

The Charpy impact strength was measured in accordance with ISO 179.

**TABLE 4**

| | | | Example 1 | Example 2 | Example 3 | Examples 4 | Example 5 | Example 6 | Comparative Examples 1 | Comparative Example 2 |
|---|---|---|---|---|---|---|---|---|---|---|
| Unopened GF index | | | 100 | 100 | 100 | 100 | 100 | 100 | 625 | 100 |
| Appearance | | | Acceptable | Acceptable | Acceptable | Acceptable | Acceptable | Acceptable | Unacceptable | Acceptable |
| | 100 Hr | ΔL | -0.9 | -0.8 | -0.6 | -0.6 | -1.0 | -0.6 | -0.7 | -1.4 |
| | | Δa | 0.0 | 0.0 | 0.0 | -0.1 | -0.2 | -0.1 | -0.2 | -0.1 |
| | | Δb | 1.1 | 1.1 | 1.1 | 1.0 | 1.4 | 1.2 | 1.5 | 1.2 |
| | | ΔE | 1.4 | 1.4 | 1.3 | 1.2 | 1.8 | 1.3 | 1.6 | 1.9 |
| | 300 Hr | ΔL | -1.1 | -1.1 | -0.6 | -1.1 | -1.0 | -1.0 | -1.6 | -2.8 |
| Weatherability | | Δa | 0.0 | 0.0 | 0.0 | 0.0 | -0.1 | 0.0 | -0.1 | 0.2 |
| (with rain) | | Δb | 1.1 | 1.1 | 1.4 | 1.3 | 2.2 | 1.6 | 2.2 | 3.3 |
| | | ΔE | 1.6 | 1.6 | 1.5 | 1.7 | 2.4 | 1.9 | 2.7 | 4.4 |
| | 500 Hr | ΔL | -0.6 | -1.3 | -0.9 | -0.5 | -1.1 | -1.1 | -0.9 | -5.1 |
| | | Δa | 0.0 | 0.0 | 0.0 | -0.1 | -0.1 | -0.1 | -0.2 | 0.5 |
| | | Δb | 1.9 | 1.6 | 1.9 | 1.4 | 2.4 | 2.0 | 2.4 | 4.8 |
| | | ΔE | 2.0 | 2.0 | 2.0 | 1.5 | 2.6 | 2.3 | 3.2 | 7.0 |
| | 500 Hr | ΔL | -0.1 | -0.1 | 0.1 | 0.2 | 0.2 | 0.2 | -0.1 | - |
| Weatherability | | Δa | -0.1 | -0.1 | -0.1 | -0.2 | -0.3 | -0.2 | -0.3 | - |
| (without rain) | | Δb | 0.1 | 0.1 | 0.1 | -0.2 | 0.6 | 0.5 | 0.3 | - |
| | | ΔE | 0.2 | 0.2 | 0.2 | 0.3 | 0.6 | 0.6 | 0.4 | - |
| Appearance after weatherability test | | | Acceptable | Acceptable | Acceptable | Acceptable | Fair | Acceptable | Unacceptable | Unacceptable |
| Tensile strength at break | 23°C | MPa | - | 118 | 122 | 120 | 120 | 120 | - | 120 |
| Flexural modulus | 90°C | MPa | - | 4630 | 4750 | 4590 | 4650 | 4550 | - | 4550 |
| Charpy impact strength (with notch) | 23°C | KJ/m² | - | 30 | 30 | 31 | 29 | 30 | - | 30 |

As is clear from the weatherability test results, the shaped products of the examples were discolored to only a small extent when subjected to the weatherability test for 500 hours. In Comparative Example 1 in which polypropylene having a long relaxation time was used as the resin included in the component (A), the appearance of the shaped product was poor due to a large amount of unopened glass fibers (i.e., the shaped product cannot be used without having to paint (coat) the shaped product).

### INDUSTRIAL APPLICABILITY

A shaped product obtained by molding the long fiber-reinforced resin composition according to the invention may suitably used for automotive parts (e.g., front end, fan shroud, cooling fan, engine undercover, engine cover, radiator box, side door, slide door, back door inner, back door outer, outer panel, fender, roof rail, door handle, luggage box, wheel cover, steering wheel, and trim), bicycle/motorcycle parts (e.g., luggage box, handlebars, and wheel), household appliances (e.g., warm water shower toilet sheet, bathroom supplies, prefabricated bath ceiling, bathtub parts, chair legs, valves, and meter box), washing machine parts (e.g., washing machine tub and balancing ring), wind generator fans electric tools, lawn mower handles, hose joints, and the like.

Although only some exemplary embodiments and/or examples of the invention have been described in detail above, those skilled in the art will readily appreciate that many modifications are possible in the exemplary embodiments and/or examples without materially departing from the novel teachings and advantages of the invention. Accordingly, all such modifications are intended to be included within the scope of the invention.
The documents cited in the specification are incorporated herein by reference in their entirety.

## Claims

1. A long fiber-reinforced resin composition comprising components (A), (B), and (C), the composition comprising 50 to 90 wt% of the component (A) and 10 to 50 wt% of the component (B) based on the total content of the components (A) and (B),
the component (A) having a content of reinforcing fibers of 20 to 60 wt% based on the total content of the components (A) and (B),
the component (A) being long fiber-reinforced thermoplastic resin pellets comprising a thermoplastic resin, a modified polyolefin resin that is modified with an unsaturated carboxylic acid or a derivative thereof, and reinforcing fibers, wherein (A-1) the thermoplastic resin has a melt index (resin temperature: 230°C, load: 21.18 N) of 100 to 250 g/10 min, (A-2) the thermoplastic resin has a relaxation time A of 0.1 sec or less when an angular frequency w is 1 rad/sec, the relaxation time A being calculated from a storage modulus G' and a loss modulus G" measured using a cone & plate rheometer, (A-3) the long fiber-reinforced thermoplastic resin pellets have a reinforcing fiber content of 40 to 70 wt%, and (A-4) the long fiber-reinforced thermoplastic resin pellets have a modified polyolefin resin content of 1 to 5 wt%,
the component (B) being a polyolefin resin wherein (B-1) the polyolefin resin has a melt index (resin temperature: 230°C, load: 21.18 N) of 20 to 70 g/10 min, and (B-2) the polyolefin resin has a relaxation time A of 0.23 sec or less when an angular frequency ω is 1 rad/sec, the relaxation time A being calculated from a storage modulus G' and a loss modulus G" measured using a cone & plate rheometer, and
the component (C) comprising (C-1) 0.1 to 10 parts by weight of zinc sulfide, (C-2) 0.01 to 1.0 parts by weight of a hindered amine-based light stabilizer, (C-3) 0.01 to 1.0 parts by weight of at least one of a phenol-based antioxidant and a phosphorus-based antioxidant, and (C-4) 0 to 10 parts by weight of an organic pigment, based on 100 parts by weight of the components (A) and (B) in total.

2. The long fiber-reinforced resin composition according to claim 1, wherein the component (C-3) comprises both the phenol-based antioxidant and the phosphorus-based antioxidant.

3. The long fiber-reinforced resin composition according to claim 1 or 2, wherein the component (C) further comprises (C-5) 0.01 to 1.0 parts by weight of at least one light absorber selected from a benzoate-based light absorber, a benzotriazole-based light absorber, and an alkyl benzoate-based light absorber, based on 100 parts by weight of the components (A) and (B) in total.

4. The long fiber-reinforced resin composition according to any one of claims 1 to 3, wherein the long fiber-reinforced thermoplastic resin pellets have a length of 4 mm to 8 mm.

5. The long fiber-reinforced resin composition according to any one of claims 1 to 4, wherein the component (A) has a content of reinforcing fibers of 20 to 50 wt% based on the total content of the components (A) and (B).

6. A shaped product comprising the long fiber-reinforced resin composition according to any one of claims 1 to 5.
